# EUROPÄISCHE PATENTANMELDUNG

(11) **EP 3 388 860 A1**
(43) Veröffentlichungstag der Anmeldung: **17.10.2018**
(21) Anmeldenummer: 18164828.8
(22) Anmeldetag: 29.03.2018
(51) Int. Cl.: G01S 17/02, G01S 17/87, G01S 17/89, G01S 7/48, G01S 7/481

(54) **3D-LICHTLAUFZEITKAMERA UND VERFAHREN ZUR ERFASSUNG DREIDIMENSIONALER BILDDATEN**

(30) Priorität: 12.04.2017 DE 102017107903
(71) Anmelder: Sick AG, 79183 Waldkirch (DE)
(72) Erfinder: Baak, Josef, 79183 Waldkirch (DE); Pfister, Thorsten, 79111 Freiburg (DE)

(57) **Zusammenfassung**

Es wird eine 3D-Lichtlaufzeitkamera (10) zur Erfassung dreidimensionaler Bilddaten aus einem Erfassungsbereich (28) mit mehreren Lichtlaufzeitmodulen (12_{1..n}) zur Erfassung eines Teilsichtbereichs (28_{1..n}) des Erfassungsbereichs (28), die jeweils einen Bildsensor (16), eine Empfangsoptik (15) und eine Schnittstelle (20) zur Ausgabe von Rohbilddaten aufweisen, und mit mindestens einem Beleuchtungsmodul (14_{1..n}) zum Aussenden eines Lichtsignals in den Erfassungsbereich (28) angegeben. Die 3D-Lichtlaufzeitkamera (10) umfasst eine zentrale Steuer- und Auswertungseinheit (30), die mit den Lichtlaufzeitmodulen (12_{1..n}) und den Beleuchtungsmodulen (14_{1..n}) verbunden ist, um die Rohbilddaten zu empfangen und daraus die dreidimensionalen Bilddaten zu erzeugen, einen gemeinsamen Anschluss (42) zur Ausgabe dreidimensionaler Bilddaten und/oder daraus abgeleiteter Daten und ein gemeinsames Gehäuse (44), in dem die Lichtlaufzeitmodule (12_{1..n}), das mindestens eine Beleuchtungsmodul (14_{1..n}) und die zentrale Steuer- und Auswertungseinheit (30) untergebracht sind.

## Beschreibung

Die Erfindung betrifft eine 3D-Lichtlaufzeitkamera und ein Verfahren zur Erfassung dreidimensionaler Bilder aus einem Erfassungsbereich nach dem Oberbegriff von Anspruch 1 beziehungsweise 15.

Im Gegensatz zu einer herkömmlichen Kamera nimmt eine 3D-Kamera auch eine Tiefeninformation auf und erzeugt somit dreidimensionale Bilddaten mit Abstands- oder Entfernungswerten für die einzelnen Pixel des 3D-Bildes, das auch als Entfernungsbild oder Tiefenkarte bezeichnet wird. Die zusätzliche Entfernungsdimension lässt sich in einer Vielzahl von Anwendungen nutzen, um mehr Informationen über Objekte in der von der Kamera erfassten Szenerie zu gewinnen und so verschiedene Aufgaben zu lösen.

In der Automatisierungstechnik können anhand dreidimensionaler Bildinformationen Objekte erfasst und klassifiziert werden, um weitere automatische Bearbeitungsschritte davon abhängig zu machen, welche Objekte vorzugsweise einschließlich ihrer Position und Orientierung erkannt wurden. Damit kann beispielsweise die Steuerung von Robotern oder verschiedenartigen Aktoren an einem Förderband unterstützt werden.

Bei Fahrzeugen, die auf öffentlichen Straßen oder in abgeschlossener Umgebung speziell im Bereich der Fabrik- und Logistikautomatik verkehren, soll mit einer 3D-Kamera die gesamte Umgebung und insbesondere ein geplanter Fahrweg möglichst vollständig und dreidimensional erfasst werden. Das betrifft praktisch alle denkbaren Fahrzeuge, seien es solche mit Fahrer wie PKW, LKW, Arbeitsmaschinen und Gabelstapler oder führerlose Fahrzeuge wie AGVs (Automated Guided Vehicle) oder Flurförderzeuge. Die Bilddaten werden genutzt, um die autonome Navigation zu ermöglichen oder einen Fahrer zu unterstützen, unter anderem um Hindernisse zu erkennen, Kollisionen zu vermeiden oder das Be- und Entladen von Transportgütern einschließlich Kartons, Paletten, Containern oder Anhängern zu erleichtern.

Zur Ermittlung der Tiefeninformationen sind verschiedene Verfahren bekannt, wie Lichtlaufzeitmessungen oder Stereoskopie. Bei der hier betrachteten Lichtlaufzeitmessung (TOF, Time of Flight) wird eine Szene mit amplitudenmoduliertem Licht ausgeleuchtet. Die Kamera misst für jeden Bildpunkt die Laufzeit des reflektierten Lichtes. In einem Pulsverfahren werden dafür Lichtpulse ausgesandt und die Dauer zwischen Sende- und Empfangszeitpunkt gemessen. Bei Verwendung von Detektorarrays - insbesondere 2D-CCD- oder CMOS- Bildsensoren - kann dies auch indirekt mittels des sogenannten Shutter-Prinzips geschehen, bei dem das Detektorarray nach Aussenden des Lichtpulses für eine definierte Zeitdauer (Shutterzeit) belichtet wird, so dass in Abhängigkeit der Pulslaufzeit bzw. der Objektentfernung ein unterschiedlich großer Anteil der vom Messobjekt rückreflektieren Pulsenergie in den einzelnen Detektorpixeln aufintegriert wird. Der Einfluss des Absolutwertes der am Detektor ankommenden Pulsenergie, die u.a. von der Objektremission abhängig ist, kann dadurch eliminiert werden, dass zwei Messungen mit relativ zur Pulsaussendung versetzten Shutterzeiten durchgeführt werden, deren Ergebnisse anschießend miteinander verrechnet beziehungsweise in Verhältnis gesetzt werden. In einem Phasenverfahren erfolgt eine periodische Amplitudenmodulation und Messung des Phasenversatzes zwischen Sende- und Empfangslicht. Eine Technologie für die Gewinnung von dreidimensionalen Bilddaten mit einem Phasenverfahren ist die Photomischdetektion (PMD).

Eine 3D-Kamera benötigt je nach Anwendung ein unterschiedlich großes Sichtfeld (FOV, Field of View). In autonomen Fahrzeugen werden zur Kollisionsvermeidung 3D-Kameras mit großem Sichtfeld eingesetzt (WFOV, wide field of view). Der Öffnungswinkel der Empfangsoptik beträgt in diesem Fall 70° x 60° und mehr. Bei der Inspektion von Gebinden in der Konsumgüterindustrie ist ein kleineres Sichtfeld ausreichend, der Öffnungswinkel ist üblicherweise ca. 40° x 30° (NFOV, narrow field of view). In einem weiteren Anwendungsfall in der Verkehrsüberwachung und Fahrzeugvermessung von LKW benötigt man ein lateral sehr breites und vertikal schmales Sichtfeld von ca. 120° x 30°.

Der herkömmliche Lösungsansatz ist, für die unterschiedlichen Anwendungen verschiedene Kameravarianten mit unterschiedlich großen Öffnungswinkeln anzubieten.

Das ist unflexibel und aufwändig. Auf Seiten des Herstellers müssen zahlreiche Varianten verwaltet, produziert und gelagert werden. Der Anwender kann auf Änderungen seiner Anwendung nicht reagieren, sondern muss jeweils die passende Variante bestellen.

Außerdem verringert sich bei gegebenem Bildsensor die örtliche Auflösung mit größerem Sichtfeld, da die Anzahl der Pixel gleich bleibt. Dieser Effekt führt bei der genannten WFOV-Kamera zu einer drastischen Verringerung der örtlichen Auflösung. Außerdem ist die Fremdlichtrobustheit grundsätzlich schlechter. Erforderliche kurzbrennweitige Objektive mit hoher Lichtstärke (kleine F-Zahl), wie sie für WFOV benötigt werden, sind nicht allgemein verfügbar, sondern bedürfen einer aufwändigen Objektiventwicklung. Bei dem Anwendungsbeispiel in der Verkehrsüberwachung hat das Sichtfeld ein anderes Aspektverhältnis als typische Bildsensoren, nämlich das Sichtfeld 4:1 und ein gängiger Bildsensor 4:3 oder 5:4. Das muss entweder mit einer Sonderentwicklung der Optik angegangen werden, oder es wird nur ein Bildausschnitt verwendet (ROI, region of interest) und damit der Bildsensor nicht effizient genutzt.

In manchen Anwendungen ist selbst der Öffnungswinkel einer WFOV-Variante nicht groß genug. Ein bekannter Ausweg ist dann, mehrere 3D-Kameras zu kombinieren. Deren Messdaten müssen in einer separaten zentralen Auswertungseinheit zusammengeführt und ausgewertet werden. Der Anwender erkauft sich das große Sichtfeld durch eine Reihe von Nachteilen. Zunächst ist eine teure zusätzliche zentrale Auswertungseinheit notwendig, für die auch anwenderseitig vor einem praktischen Einsatz Softwarealgorithmen entwickelt und implementiert werden müssen. Das betrifft nicht nur die Auswertung, sondern auch die Ansteuerung, um ein Zusammenspiel der Kameras vor allem hinsichtlich der präzisen Synchronisation zu ermöglichen. Dann sind die Installation einschließlich Verkabelung, Montage, Justage sowie die Inbetriebnahme mit Kalibrierung der Relativpositionen und Orientierungen der einzelnen Kameras zueinander äußerst mühsam.

Die US 2011/0109748 A1 offenbart ein Kamera-Array aus einer Anzahl von TOF-Kameras, die im Kreis um ein Objekt angeordnet sind, um es aus verschiedenen Winkeln aufzunehmen. Dabei handelt es sich um eigenständige Kameras, mit den im Vorabsatz geschilderten Nachteilen.

Die EP 2 546 776 B1 offenbart einen kamerabasierten Codeleser mit einer Vielzahl von zeilenförmigen Bildsensoren in einem gemeinsamen Grundkörper, die ihre Einzellesefelder zu einem zeilenförmigen Lesefeld überlagern. Das Konzept ist für eine Spezialanwendung des Codelesens an einem Förderband geeignet, nicht aber für die Erfassung von dreidimensionalen Bilddaten mit variablem oder erweiterbarem Sichtfeld.

Es ist deshalb Aufgabe der Erfindung, eine verbesserte 3D-Lichtlaufzeitkamera anzugeben.

Diese Aufgabe wird durch eine 3D-Lichtlaufzeitkamera und ein Verfahren zur Erfassung dreidimensionaler Bilder aus einem Erfassungsbereich nach Anspruch 1 beziehungsweise 15 gelöst. Die 3D-Lichtlaufzeitkamera weist mindestens ein Beleuchtungsmodul und mehrere, also mindestens zwei oder noch mehr Lichtlaufzeitmodule für die Erfassung von Rohbilddaten zur Bestimmung der Lichtlaufzeit zur Entfernungsmessung jeweils für einen Teilsichtbereich des Erfassungsbereichs auf, wobei die Teilsichtbereiche einander je nach Ausführungsform überlappen oder nicht. Die Beleuchtungsmodule sind je nach Ausführungsform direkt einem Lichtlaufzeitmodul zugeordnet, für mehrere Lichtlaufzeitmodule zuständig, oder es sind umgekehrt mehrere Beleuchtungsmodule für ein Lichtlaufzeitmodul vorgesehen. Die Lichtlaufzeitmodule umfassen jeweils einen Bildsensor, eine Empfangsoptik und eine Schnittstelle zur Ausgabe der Rohbilddaten. Um mit den Rohbilddaten eine Lichtlaufzeit zu bestimmen, ist vorzugsweise in den Lichtlaufzeitmodulen eine Lichtlaufzeiteinheit vorgesehen, die separat oder zumindest teilweise in den Bildsensor integriert sein kann. Das Lichtlaufzeitverfahren ist grundsätzlich beliebig, bevorzugt aber phasenbasiert und insbesondere das einleitend erwähnte PMD-Verfahren oder auch pulsbasiert insbesondere unter Verwendung des einleitend erwähnten Shutter-Prinzips.

Die Erfindung geht nun von dem Grundgedanken aus, die Lichtlaufzeitmodule über eine zentrale Steuer- und Auswertungseinheit zu der 3D-Kamera in einem gemeinsamen Gehäuse mit einem gemeinsamen Anschluss zu verbinden. Dazu sind die Lichtlaufzeitmodule an die zentrale Steuer- und Auswertungseinheit angeschlossen. Dafür reicht zunächst eine mittelbare Verbindung beispielsweise über ein anderes Lichtlaufzeit- beziehungsweise Beleuchtungsmodul, vorzugsweise ist aber jedes Modul direkt mit der zentralen Steuer- und Auswertungseinheit verbunden, was dann zu einer Sterntopologie führt.

Die zentrale Steuer- und Auswertungseinheit sammelt die Rohbilddaten der Lichtlaufzeitmodule und erzeugt daraus die dreidimensionalen Bilddaten. Dem können Vorverarbeitungen vorausgehen und sich Nachbearbeitungsschritte beziehungsweise eine anwendungsspezifischen Auswertung der dreidimensionalen Bilddaten anschließen. Die zentrale Steuer- und Auswertungseinheit koordiniert auch die Aufnahmen durch die Lichtlaufzeitmodule sowie die Übertragung der Rohbilddaten, kann die diversen Module miteinander synchronisieren. Über einen gemeinsamen Anschluss gibt die zentrale Steuer- und Auswertungseinheit zumindest Teile der dreidimensionalen Bilddaten und/oder Ergebnisse von deren Auswertungen aus, verfügt somit über eine zentrale Schnittstelle für die ganze 3D-Lichtlaufzeitkamera. Entsprechendes gilt vorzugsweise für eine gemeinsame Energieversorgung. Alle Module sind mit der zentralen Steuer- und Auswertungseinheit in einem gemeinsamen Gehäuse untergebracht. Das System stellt folglich nach außen eine einzige 3D-Lichtlaufzeitkamera dar.

Die Erfindung hat den Vorteil, dass durch den modularen Aufbau verschiedenste Sichtfelder äußerst variabel eingestellt werden können. Diese Variabilität und die möglichen effektiven Öffnungswinkel gehen auch weit über die Möglichkeiten einer WFOV-Kamera hinaus. Auch das Aspektverhältnis, also das Verhältnis von Breite zu Höhe, kann flexibel gewählt werden. Anders als bei einer WFOV-Kamera bleibt bei solchen Erweiterungen und Anpassungen die Ortsauflösung erhalten. Trotz dieser Verbesserungen bleiben die einzelnen Lichtlaufzeitmodule sehr einfach, bauklein und kostengünstig. Für den jeweiligen Teilsichtbereich genügt ein einfacheres NFOV-Objektivdesign mit einer Auswahl an potenziell ohne Entwicklungsaufwand verfügbaren und vergleichsweise kostengünstigen Standardbauteilen und weniger und besser zu beherrschenden Verzeichnungen und Randlichtabfall. Entsprechende Vorteile gelten für das mindestens eine Beleuchtungsmodul, denn eine homogene Beleuchtung ist in einem kleinen Sichtfeld wesentlich einfacher zu realisieren. Ein weiterer Vorteil ist die erhöhte Fremdlichtrobustheit. Zum einen ist das Einfallswinkelspektrum klein und erlaubt kleinere Filterbandbreiten. Außerdem ist die Fläche der Szene, aus denen jedes Pixel eines Bildsensors in den Lichtlaufzeitmodulen Licht einsammelt, kleiner als bei einer WFOV-Kamera.

Die 3D-Lichtlaufzeitkamera ist insgesamt kompakt und kostengünstig. Durch günstige bauliche Anordnung der Module zueinander und zur zentralen Steuer- und Auswertungseinheit ergeben sich kurze Signalwege. Sie kann sehr einfach installiert werden. Aufgrund des gemeinsamen Anschlusses gibt es keinen besonderen Verkabelungsaufwand, die Lichtlaufzeit- und Beleuchtungsmodule sind intern verbunden und ausgerichtet, so dass außer einer Ausrichtung der 3D-Lichtlaufzeitkamera als Ganzes keine Justage erforderlich ist. Alle Komponenten sind ein einem Gerät kombiniert, das durch ein robustes und kompaktes Gehäuse geschützt wird.

Das gemeinsame Gehäuse weist bevorzugt als Grundfläche die Form eines regelmäßigen n-Ecks mit n> 4 auf, und die Lichtlaufzeitmodule sind an zumindest einigen Seiten des n-Ecks angeordnet und nach außen ausgerichtet. Das ermögliche eine sehr kompakte und flache Bauweise. Weniger Ecken sind prinzipiell denkbar, aber nicht vorteilhaft, weil dann ein einzelnes Lichtlaufzeitmodul einen zu großen Sichtwinkel abdecken müsste. Es sind zahlreiche Varianten im selben Gehäusekonzept denkbar, die jeweils mehr oder weniger Seiten des Gehäuses tatsächlich mit Lichtlaufzeitmodulen besetzen, bis hin zu einer effektiven 360°-Rundumsicht. Bevorzugt ist bei einem jeweiligen Lichtlaufzeitmodul mindestens ein Beleuchtungsmodul angeordnet.

Die Lichtlaufzeitmodule weisen bevorzugt ein Gehäuse mit einer Grundfläche in Form eines Trapezes oder eines Dreiecks passend zu einem Segment zwischen Zentrum und zwei benachbarten Ecken des n-Ecks auf. Dadurch entsteht in erster Näherung ein dreieckförmiges Segment des n-Ecks ähnlich einem Tortenstück, welches 360°/n abdeckt. Gewisse Toleranzen zum Einsetzen werden vorzugsweise vorgehalten. Außerdem ist die innere Spitze des Dreiecks vorzugsweise abgeschnitten, was dann zu einer Trapezform führt. Dadurch entsteht im Zentrum Raum für Anschlüsse und die zentrale Steuer- und Auswertungseinheit.

Bevorzugt sind einige, noch bevorzugter alle Lichtlaufzeitmodule mit einem eigenen Beleuchtungsmodul kombiniert, insbesondere in einem gemeinsamen Modulgehäuse. Das erleichtert die zeitkritische Synchronisation zwischen Beleuchtung und Aufnahme erheblich, die dann lokal innerhalb des Lichtlaufzeitmoduls erfolgen kann. Dazu ist vorzugsweise eine entsprechende Modulsteuereinheit im Lichtlaufzeitmodul vorgesehen. Die Aktivität der Lichtlaufzeitmodule kann auf verschiedene Weisen separiert werden, wie völlig räumlich getrennte Sichtfelder, unterschiedliche Zeitschlitze, Modulationsfrequenzen oder Codierungen. Sind alternativ Lichtlaufzeitmodule und Beleuchtungsmodule nicht miteinander kombiniert, so muss die Synchronisation über die zentrale Steuer- und Auswertungseinheit erfolgen, oder ein Modul fungiert als Master. Eine zentrale Synchronisierung ist möglich, sogar für kombinierte Lichtlaufzeit- und Beleuchtungsmodule, aber aufwändig.

Die Teilsichtbereiche der Lichtlaufzeitmodule sind vorzugsweise unterschiedlich und ergänzen einander zu dem Erfassungsbereich. Somit sind die Teilsichtbereiche für sich kleiner als der Erfassungsbereich. Ein größeres Sichtfeld wird modular aus Teilsichtbereichen zusammengesetzt, mit den oben geschilderten Vorteilen gegenüber einer einzigen WFOV-Kamera. Dabei ergänzen sich die Teilsichtbereiche entlang einer oder zwei Dimensionen, d.h. horizontal oder vertikal oder horizontal und vertikal, zu dem größeren gesamten Erfassungsbereich.

Zumindest einige der Teilsichtbereiche überlappen einander bevorzugt zumindest teilweise. Daraus ergibt sich eine höhere Auflösung oder Punktedichte, außerdem können nachteilige Effekte wie sehr dunkle oder wenig remittierende Objekte, Abschattungen, Glanz oder Mehrpfadeffekte durch die redundante Erfassung kompensiert werden. In einigen Ausführungsformen haben zwei oder noch mehr Lichtlaufzeitmodule eine im Wesentlichen vollständige Überlappung und beobachten damit den gleichen Teilsichtbereich, der im Extremfall zugleich dem Erfassungsbereich entspricht. Es sind aber auch versetzte Anordnungen denkbar, in denen Teilsichtbereiche geschachtelt zu unterschiedlichen Graden überlappen. Selbst wenn an sich keine redundante Überwachung angestrebt ist, sondern die Teilsichtbereiche einander zu einem großen Erfassungsbereich ergänzen sollen, kann ein Überlapp an den Rändern statt exakt aneinander anschließender Teilsichtbereiche vorteilhaft sein. Bei der Datenfusion kann der Überlapp leicht anhand einer Kalibration der Anordnung und Orientierung der Lichtlaufzeitmodule korrigiert werden. Dafür ermöglicht der Überlapp, einen Randbereichsabfall zu kompensieren und in solchen Randbereichen das Detektionsvermögen zu erhöhen und Störer zu identifizieren.

Zumindest einige der Lichtlaufzeitmodule und/oder das mindestens eine Beleuchtungsmodul weisen bevorzugt eine Bewegungseinheit zum Verändern des Teilsichtbereichs auf. Dabei handelt es sich um eine mechanische Aktorik, vorzugsweise jedoch eine elektronische Verstellmöglichkeit beispielsweise mit einem Piezoaktor. Die Teilsichtbereiche sind dadurch variabel, sowohl beim Einrichten und Justieren als auch bei einer Umgestaltung der Anwendung oder sogar dynamisch im Betrieb. Vorzugsweise wird durch die Bewegung die Orientierung verkippt, aber auch eine laterale Bewegung oder eine Rotation ist denkbar.

Die zentrale Steuer- und Auswertungseinheit weist bevorzugt eine Bilddatenflusssteuerung auf, um die Rohbilddaten koordiniert aus den Lichtlaufzeitmodulen auszulesen. Beim Auslesen der Rohbilddaten entsteht ein großer Datenfluss, der auf diese Weise von der zentralen Steuer- und Auswertungseinheit möglichst unter optimaler Ausnutzung der Ressourcen und Bandbreiten gesteuert wird.

Die Bilddatenflusssteuerung weist bevorzugt eine Multiplexeinheit zum sequentiellen Auslesen von Rohbilddaten aus jeweils einem anderen Lichtlaufzeitmodul auf. Dadurch werden die Lichtlaufzeitmodule geordnet ausgelesen, und es bestehen nur moderate Anforderungen an Bandbreite und Verarbeitungsgeschwindigkeit der Rohbilddaten.

Die Bilddatenflusssteuerung weist bevorzugt mehrere Kanäle auf. Damit können Rohbilddaten aus mehreren, mindestens zwei Lichtlaufzeitmodulen gleichzeitig oder sequentiell ausgelesen werden. Damit wird eine kürzere Bearbeitungszeit und letztlich höhere Bildaufnahmefrequenz möglich, oder es genügt eine langsamere Auslesegeschwindigkeit bei sonst gleichen Bedingungen. Entsprechende Bausteine (Bridge) zum Auslesen von zwei Bilddatenströmen zweier Bildsensoren sind verfügbar, und damit ist eine solche Lösung kostengünstig umsetzbar. Es ist nicht erforderlich, dass es so viele Kanäle wie Lichtlaufzeitmodule gibt, sondern es können beispielsweise jeweils zwei Kanäle zugleich betrieben und per Multiplexing umgeschaltet werden.

Die zentrale Steuer- und Auswertungseinheit ist bevorzugt für eine Aufbereitung der Rohbilddaten ausgebildet, die zumindest einen der Schritte Korrektur von Objektivverzeichnungen der Empfangsoptik, Kompensation von Driften, Korrektur der Anordnung der Lichtlaufzeitmodule zueinander in Lage und/oder Orientierung oder Berücksichtigung von Kalibrierdaten umfasst. Damit werden die Rohbilddaten vor der Fusion zu den dreidimensionalen Bilddaten einer Vorverarbeitung (Preprocessing) unterzogen. Je nachdem, welche Rohbilddaten das Lichtlaufzeitmodul liefert, werden dabei auch für den jeweiligen Teilsichtbereich Entfernungs- oder Tiefenwerte berechnet, oder sie sind schon in den Rohbilddaten enthalten. Möglich ist auch, mehrere Aufnahmen miteinander zu verrechnen wie bei HDR (High Dynamic Range Imaging). Es folgt dann vorzugsweise eine Datenfusion für das ganze System, in der aus den vorverarbeiteten Rohbilddaten der Teilsichtbereiche dreidimensionale Bilddaten des Erfassungsbereichs oder darin gewählter Ausschnitte (ROI, Region of Interest) erzeugt werden.

Die zentrale Steuer- und Auswertungseinheit ist bevorzugt für eine Weiterverarbeitung der dreidimensionalen Bilddaten nach Fusion der Rohbilddaten ausgebildet, insbesondere eine Datenkompression, eine Auswahl von interessierenden Bereichen, eine Objekterkennung oder ein Objekttracking. In dieser Weiterverarbeitung (Postprocessing) können nachgelagerte Bildverarbeitungen auf den dreidimensionalen Bilddaten folgen, etwa eine Datenkompression für eine Ausgabe an dem gemeinsamen Anschluss, eine Objekterkennung, ein Objekttracking oder sogar anwendungsspezifische Auswertungen, welche das eigentliche Auswertungsziel der Anwendung vorbereiten oder sogar schon umsetzen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein Blockschaltbild einer Ausführungsform einer 3D-Lichtlaufzeitkamera mit mehreren Lichtlaufzeit- und Beleuchtungsmodulen und einer zentralen Steuer- und Auswertungseinheit;
- Fig. 2a: ein Blockschaltbild eines kombinierten Lichtlaufzeit- und Beleuchtungsmoduls;
- Fig. 2b: eine Vorderansicht des kombinierten Lichtlaufzeit- und Beleuchtungsmoduls gemäß Figur 2a;
- Fig. 3: eine schematische Draufsicht auf eine 3D-Lichtlaufzeitkamera mit achteckiger Gehäusegrundform, wobei beispielhaft zwei Seiten mit Lichtlaufzeit- und Beleuchtungsmodulen besetzt sind;
- Fig. 4: eine schematische Draufsicht auf ein kombiniertes Lichtlaufzeit- und Beleuchtungsmodul mit einem Modulgehäuse passend zu der achteckigen Gehäusegrundform gemäß Figur 3;
- Fig. 5: eine schematische Draufsicht auf eine 3D-Lichtlaufzeitkamera mit achteckiger Gehäusegrundform ähnlich Figur 3, jedoch mit 360°-Sichtbereich durch Besetzen aller Seiten mit Lichtlaufzeit- und Beleuchtungsmodulen;
- Fig. 6: eine schematische Draufsicht auf ein Fahrzeug mit einer 3D-Lichtlaufzeitkamera mit 180°-Sichtbereich;
- Fig. 7: eine schematische Schnittansicht der 3D-Lichtlaufzeitkamera gemäß Figur 6, wobei jedoch das Beleuchtungsmodul über statt neben dem zugehörigen Lichtlaufzeitmodul angeordnet ist;
- Fig. 8a: eine schematische Draufsicht auf eine weitere Ausführungsform einer 3D-Lichtlaufzeitkamera nun mit gestapelten Lichtlaufzeit- und Beleuchtungsmodulen zur Erweiterung des Sichtbereichs in Elevation;
- Fig. 8b: eine Vorderansicht der 3D-Lichtlaufzeitkamera gemäß Figur 8a;
- Fig. 9: eine schematische Draufsicht auf eine weitere Ausführungsform einer 3D-Lichtlaufzeitkamera mit zwei Lichtlaufzeit- und Beleuchtungsmodulen, deren Teilsichtbereiche einander überlappen; und
- Fig. 10: eine schematische Draufsicht auf eine weitere Ausführungsform einer 3D-Lichtlaufzeitkamera mit vier Lichtlaufzeit- und Beleuchtungsmodulen in einer gemischten Anordnung von einander überlappenden und ergänzenden Teilsichtbereichen.

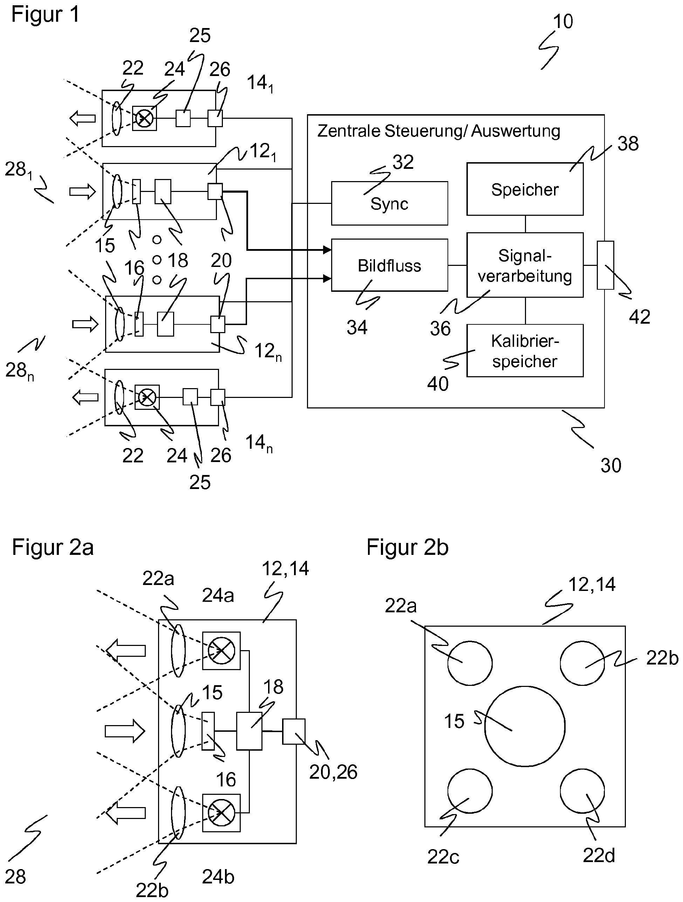

Figur 1 zeigt ein Blockschaltbild einer 3D-Kamera 10, die mehrere Lichtlaufzeitmodule 12_{1..n} aufweist, denen jeweils Beleuchtungsmodule 14_{1...n} zugeordnet sind. Die dargestellte direkte Zuordnung von Lichtlaufzeitmodulen 12_{1..n} und Beleuchtungsmodulen 14_{1..n} ist vorteilhaft, aber in anderen Ausführungsformen ist auch denkbar, das Beleuchtungsmodule 14_{1..n} für mehrere Lichtlaufzeitmodule 12_{1..n} zuständig sind oder umgekehrt zu einem Lichtlaufzeitmodul 12_{1..n} mehrere Beleuchtungsmodule 14_{1..n} gehören.

Die Lichtlaufzeitmodule 12_{1..n} umfassen jeweils eine Empfangsoptik 15, einen Bildsensor 16 mit einer Vielzahl von beispielsweise zu einer Matrix angeordneten Pixeln, eine Lichtlaufzeiteinheit 18 und eine Schnittstelle 20 zur Ausgabe von Rohbilddaten. Bevorzugt werden als Empfangsoptik 15 Objektive mit einem kleinen Öffnungswinkel eingesetzt. Zusätzlich umfasst die Empfangsoptik 15 bevorzugt optische Filter (z.B. Bandpassfilter zur Unterdrückung von Störlichtquellen) sowie ggf. weitere oder andere refraktive, reflektive oder diffraktive optische Elemente ggf. mit speziellen Beschichtungen. Die Auftrennung in einen Bildsensor 16 und eine separate Lichtlaufzeiteinheit 18 ist zwar möglich, dient aber eher der verständlichen Erläuterung. Vorzugsweise ist die Funktionalität der Lichtlaufzeiteinheit 18 in die Pixel oder den Bildsensor 16 integriert. Auch die Schnittstelle 20 kann eine Funktion des Bildsensors 16 sein. Die Beleuchtungsmodule 14_{1..n} weisen jeweils eine Sendeoptik 22, einen Lichtsender 24 mit mindestens einer Lichtquelle, beispielsweise LEDs oder Laser (beispielsweise Kantenemitter oder VCSEL-Array) und einem Treiber 25 für die Ansteuerung und Modulation sowie einen Anschluss 26 zur Steuerung der Beleuchtung auf. Die Sendeoptik 22 kann aus refraktiven und/oder diffraktiven optischen Elementen (z.B. Linse oder Objektiv) und/oder aus Spiegeloptiken (Reflektoren) und/oder aus Diffusoren bestehen. Des Weiteren kann die Sendeoptik 22 direkt in den Lichtsender 24 integriert oder mit diesem zu einem Bauteil verbunden sein (z.B. LED mit integrierter Linse oder VCSEL-Array mit nachgelagertem Diffusor, der in das Package integriert ist).

Im Betrieb werden die einzelnen Teilsichtbereiche 28_{1...n} der Lichtlaufzeitmodule 12_{1..n} von den Beleuchtungsmodulen 14_{1..n} mit gepulsten oder periodisch modulierten Lichtsignalen beleuchtet, und aus den Empfangssignalen der Pixel der jeweiligen Bildsensoren 16 bestimmen die Lichtlaufzeiteinheiten 18 die Bildrohdaten, in denen zu den Pixeln oder zu Pixelgruppen die Information über die Flugdauer (TOF, Time of Flight) der Lichtsignale bis zu einem Objekt und zurück enthalten ist. Daraus kann dann über die Lichtgeschwindigkeit der Objektabstand berechnet werden. Derartige Lichtlaufzeitmessungen sind an sich bekannt, drei nicht abschließende Beispiele sind eine direkte Laufzeitmessung durch TDCs bei einem Pulsverfahren (Time to Digital Converter), eine indirekte Pulslaufzeitmessung mit CMOS- oder CCD-Pixeln mittels Shutter-Prinzips wie eingangs beschrieben oder Photomischdetektion bei einem Phasenverfahren (TDC). In einigen Ausführungsformen ergibt sich die Lichtlaufzeit erst nach statistischer Auswertung einer Vielzahl von Ereignissen beziehungsweise Pixeln, um Rauscheinflüsse durch Effekte wie Umgebungslicht oder Dunkelzählraten auszugleichen, insbesondere im Falle von SPADs (Single Photon Avalanche Diodes). Die 3D-Kamera 10 wird durch die mehreren Lichtlaufzeitmodule 12_{1..n} zu einer Multi-Apertur-Kamera, welche die einzelnen Teilsichtbereiche 28_{1..n} kombiniert. Dabei kann wegen der mehreren Lichtlaufzeitmodule 12_{1..n} ein erweitertes Sichtfeld bei gleichbleibender lateraler Ortsauflösung erreicht werden.

Die Lichtlaufzeitmodule 12_{1..n} und Beleuchtungsmodule 14_{1..n} sind an eine zentrale Steuer- und Auswertungseinheit 30 angeschlossen. Zur Erläuterung der Aufgaben der zentralen Steuer- und Auswertungseinheit 30 sind darin beispielhaft mehrere Funktionsblöcke dargestellt.

Eine Synchronisationseinheit 32 steuert das Zeitverhalten der angeschlossenen Module 12_{1..n}, 14_{1..n} und leistet weitere Steuerungsaufgaben wie eine Konfiguration oder die Vorgabe eines bestimmten Modulationsverhaltens. Dabei sind verschiedene Ausführungsformen denkbar. Einerseits können tatsächlich mehrere oder alle Module 12_{1..n}, 14_{1..n} zentral gleichzeitig aktiviert werden. Dann wirken mehrere oder alle Beleuchtungsmodule 14_{1..n} gemeinsam wie eine große Beleuchtung, wobei Unterschiede in Eigenschaften wie Spektrum, Leistung oder Modulation immer noch denkbar sind, und die Lichtlaufzeitmodule 12_{1..n} nehmen simultan Rohbilddaten auf. Es ist aber auch eine sequentielle Aufnahme der Rohbilddaten einzelner oder aller Lichtlaufzeitmodul 12_{1..n} denkbar.

In anderen Ausführungsformen erfolgt die besonders zeitkritische Synchronisation zwischen Lichtlaufzeitmodul 12_{1..n} und zugehörigem Beleuchtungsmodul 14_{1..n} lokal in den Modulen, die also hinsichtlich Beleuchtung und Bildaufnahme eigenständig arbeiten. Es ist dann keine hochgenaue zentrale Synchronisierung erforderlich. Eine gegenseitige Beeinflussung lässt sich mittels Kanaltrennung im Zeitbereich (Zeitmultiplex), Frequenzbereich (Wahl unterschiedlicher Modulationsfrequenzen), mittels Codemultiplex oder räumlich durch nicht überlappende Teilsichtbereiche 28_{1..n} oder auch Kombinationen davon vermeiden. Es sind auch Mischformen zentraler und lokaler Synchronisation denkbar.

Eine Bilddatenflusssteuerung 34 oder Bridge ist mit den Schnittstellen 20 der Lichtlaufzeitmodule 12_{1..n} verbunden, um die Rohbilddaten auszulesen. Die Übertragung erfolgt vorzugsweise seriell (beispielsweise MIPI, Mobile Industry Processor Interface). Wie schon erläutert, handelt es sich bei den Rohbilddaten um noch nicht korrigierte Daten mit Distanzinformationen wie Phasen- oder Laufzeitdaten. In einer Ausführungsform leitet die Bilddatenflusssteuerung 34 mittels Multiplexing Rohdaten von jeweils einem Lichtlaufzeitmodul 12_{1..n} weiter, so dass also immer nur ein Kanal aktiv ist. Alternativ werden die Rohdaten zusammengefasst und auf einen Ausgang gelegt. Wird eine mehrkanalige Auswertung nachgeordnet, so können entsprechend mehrere Kanäle gleichzeitig weitergeleitet werden, oder die Bilddatenflusssteuerung 34 entfällt bei genügend Auswertungskanälen sogar ganz.

Eine Signalverarbeitungseinheit 36 empfängt die Rohbilddaten. Für eine schnellere Bildverarbeitung kann die Signalverarbeitungseinheit 36 dazu ausgebildet sein, mehrere Bildströme zu verarbeiten. Insbesondere ist dafür eine CPU oder ein FPGA oder eine Kombination aus CPU und FPGA (z.B. ZYNQ) mit mindestens zwei MIPI-Eingängen vorgesehen. Ergänzend oder alternativ kann auch eine GPU genutzt werden. Die Signalverarbeitungseinheit 36 ist mit einem Speicher 38 verbunden, um Rohbilddaten und Auswertungsergebnisse abzulegen. Außerdem ist ein Kalibrierspeicher 40 vorgesehen, der auch mit dem Speicher 38 gemeinsam ausgebildet sein kann und aus dem die Signalverarbeitungseinheit 36 bei Bedarf diverse Kalibrierdaten und sonstige Parameter einliest.

Die Signalverarbeitungseinheit 36 verarbeitet die Rohbilddaten in mehreren Schritten, die aber nicht alle implementiert sein müssen. Eine beispielhafte Verarbeitungskette umfasst eine Vorverarbeitung (Preprocessing) der noch einem Lichtlaufzeitmodul 12_{1..n} zugehörigen Rohbilddaten, eine Fusion zu gemeinsamen dreidimensionalen Bilddaten, deren Weiterverarbeitung (Postprocessing) und gegebenenfalls noch auf die bestimmte Anwendung bezogene Auswertungsalgorithmen. Bei der Vorverarbeitung oder Aufbereitung der Rohbilddaten wird beispielsweise eine Objektivverzeichnung der Empfangsoptik 14 korrigiert, es werden Driften insbesondere durch Temperatur kompensiert und möglicherweise mehrere Rohbilder gemeinsam verrechnet (HDR, Messbereichserweiterung bzw. Ambivalenzunterdrückung). Anschließend werden eindeutige und korrigierte Tiefenwerte des jeweiligen Lichtlaufzeitmoduls 12_{1..n} gewonnen. Vor der Fusion kann noch die Orientierung der Lichtlaufzeitmodule 12_{1..n} zueinander oder eine sonstige Kalibrierung berücksichtigt werden.

Die so gewonnenen Tiefenwerte der einzelnen Lichtlaufzeitmodule 12_{1..n} werden dann zu dreidimensionalen Bilddaten eines gemeinsamen Sichtfeldes der 3D-Kamera 10 fusioniert. Im Postprocessing können nochmals Korrekturen vorgenommen werden, beispielsweise redundante Bildinformationen in Überlappungsbereichen ausgenutzt werden, außerdem diverse Filter angewandt werden. Schließlich sind auch bereits anwendungsspezifische oder vorbereitende Auswertungsschritte der gewonnenen dreidimensionalen Bilddaten denkbar, wie Auswahl von Bildausschnitten (ROI, Region of Interest), Datenkompression, Umwandlung in ein gewünschtes Ausgabeformat, Objekterkennung, Objekttracking und dergleichen.

An einem gemeinsamen Anschluss 42 der 3D-Kamera 10 stehen dann die dreidimensionalen Bilddaten beziehungsweise daraus gewonnene Daten zur Verfügung. Weitere, nicht dargestellte gemeinsame Anschlüsse sind denkbar. Dazu zählt eine Stromversorgung, die aber auch in den gemeinsamen Anschluss 42 integriert sein kann (etwa Power over Ethernet). Sofern in der Signalverarbeitungseinheit 36 Parameter gesetzt werden können beziehungsweise entsprechende Auswertungen erfolgen, kann die 3D-Kamera 10 auch analoge oder digitale Ein- und Ausgänge haben, insbesondere Schaltausgänge, die beispielsweise zusammen mit der Stromversorgung über ein Kabel geführt werden können.

Aus mechanischer Sicht ist weiterhin ein in Figur 1 noch nicht gezeigtes gemeinsames Gehäuse vorgesehen, welches vorzugsweise auch eine einfache Montage der 3D-Kamera 10 ermöglicht. Somit stellt die 3D-Kamera 10 nach außen hin ein einheitliches System mit erweitertem Sichtfeld dar, das sich aus einfachen Modulen 12_{1..n}, 14_{1..n} und deren Teilsichtbereichen 28_{1..n} zusammensetzt.

Die Bildaufnahme durch die Module 12_{1..n}, 14_{1..n} kann sequentiell erfolgen, beispielsweise in einem Zyklus durch die Lichtlaufzeitmodule 12_{1..n} und die jeweils zugehörigen Beleuchtungsmodule 14_{1..n}. Denkbar ist auch, Lichtlaufzeitmodule 12_{1..n} unabhängig von den zugehörigen Beleuchtungsmodulen 14_{1..n} anzusteuern, um optische Störquellen wie spiegelnde Objekte zu erkennen. Alternativ werden Bilder synchron durch zumindest einige Lichtlaufzeitmodule 12_{1..n} und jeweils zugehörige Beleuchtungsmodule 14_{1..n} aufgenommen. Damit wird bei schnell beweglichen Objekten ein Zeitversatz verhindert. Außerdem wird so die Beleuchtungsleistung in überlappenden Teilen von Sichtbereichen 28_{1..n} überhöht, was den typischen Randlichtabfall der einzelnen Beleuchtungsmodule 14_{1..n} reduziert oder sogar kompensiert.

Einzelne Module 12_{1..n}, 14_{1..n} können situationsbezogen selektiv nach Bedarf an- und abgeschaltet werden um Energie zu sparen, etwa an einem Fahrzeug in Abhängigkeit von der Fahrtrichtung oder bei Förderbandanwendungen für eine Prädetektion, in der nur äußere Module 12_{1..n}, 14_{1..n} aktiv sind, und allgemein bei insbesondere statischen Anwendungen, wenn bekannt ist, dass nur in bestimmten Teilsichtbereichen 28_{1..n} eine Messung nötig ist. Denkbar ist auch ein Teilabschalten von Lichtquellen innerhalb eines Beleuchtungsmoduls 14_{1..n}, wenn eine grobe Erkennung in einem Energiesparmodus ausreicht.

In dem Blockschaltbild der Figur 1 sind die Lichtlaufzeitmodule 12_{1..n} und Beleuchtungsmodule 14_{1..n} jeweils eigenständige Module, die separat mit der zentralen Steuer- und Auswertungseinheit 30 verbunden sind. Das hat den Vorteil einer hohen Flexibilität bei Ansteuerung und Synchronisation, stellt aber zugleich hohe Anforderungen an die Synchronisation von Beleuchtung und Bildaufnahme.

Figur 2a zeigt ein Blockschaltbild eines Lichtlaufzeitmoduls 12, das mit dem zugehörigen Beleuchtungsmodul 14 als ein gemeinsames Modul ausgebildet ist. Das lässt sich nicht mehr so flexibel ansteuern. Dafür sind die Anforderungen an eine Synchronisation deutlich verringert, da die zeitkritische Synchronisation zwischen Beleuchtung und Bildaufnahme schon innerhalb des Lichtlaufzeit- und Beleuchtungsmoduls 12, 14 erfolgt und die zentrale Steuer- und Auswertungseinheit 30 von dieser Aufgabe entlastet ist. Zu den einzelnen Komponenten des gemeinsamen Lichtlaufzeit- und Beleuchtungsmoduls 12, 14 gelten die Erläuterungen wie zu der in Figur 1 dargestellten Ausführungsform sinngemäß fort. Dargestellt ist außerdem eine Ausführungsform mit mehreren Beleuchtungsmodulen für ein Lichtlaufzeitmodul. Wie eine Frontalansicht gemäß Figur 2b illustriert, ist eine Anordnung von vier Lichtquellen 24a-d mit vorgeschalteten Sendeoptiken 22a-d um den Bildsensor 16 herum besonders geeignet. Das ist nur ein Beispiel möglicher Abweichungen von einer 1:1-Zuordnung zwischen Lichtlaufzeitmodulen 12_{1..n} und Beleuchtungsmodulen 14_{1..n}.

Die mehreren Lichtlaufzeitmodule 12_{1..n}, sei es mit separaten oder integrierten Beleuchtungsmodulen 14_{1..n}, ermöglichen zwei Gerätekonzepte. Einerseits können die Teilsichtbereiche 28_{1..n} der Lichtlaufzeitmodule 12_{1..n} nicht gleich sein, also durch Versatz und/oder Orientierung nicht die gleiche Szene beobachten. Dann werden die Teilsichtbereiche 28_{1..n} zu einem gemeinsamen größeren Sichtfeld zusammengesetzt. Andererseits ist denkbar, dass die Lichtlaufzeitmodule 12_{1..n} die gleiche Szene betrachten, die Teilsichtbereiche 28_{1..n} einander folglich überlappen, um das Detektionsvermögen zu verbessern. Schließlich sind auch Kombinationen denkbar, etwa Überlappungen von Teilsichtbereichen 28_{1..n} in den Randbereichen, oder die Teilsichtbereiche 28_{1..n} sind so angeordnet, dass sowohl das Sichtfeld erweitert als auch zumindest abschnittsweise Rohbilddaten mehrfach gewonnen werden.

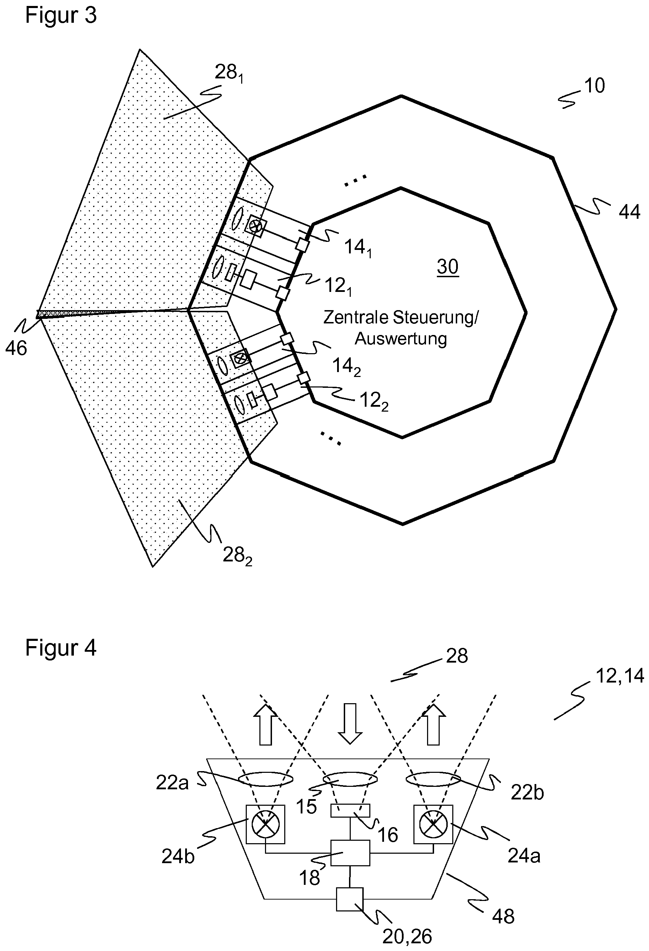

Figur 3 zeigt eine schematische Draufsicht auf eine 3D-Kamera 10 für den erstgenannten Fall einer Sichtbereichserweiterung. Die 3D-Kamera 10 ist in einem gemeinsamen Gehäuse 44 in der Form eines regelmäßigen n-Ecks untergebracht, hier eines Achtecks. Jeweils an den Seiten des n-Ecks können in dem Gehäuse 44 Lichtlaufzeitmodule 12_{1..n} und Beleuchtungsmodule 14_{1..n} angeordnet werden, wobei in der dargestellten Ausführungsform zwei Seiten besetzt sind. Im Inneren sitzt die zentrale Steuer- und Auswertungseinheit 30. Das flexible Geräteaufbaukonzept ermöglicht eine einfache Erweiterung in einer Ebene durch eine andere Anzahl von Lichtlaufzeitmodulen 12_{1..n} und Beleuchtungsmodulen 14_{1..n}, alternativ auch gestapelt in mehreren Ebenen, wobei die zentrale Steuer- und Auswertungseinheit 30 mit ihrem gemeinsamen Anschluss 42 nur einmal benötigt wird. Damit ist eine sehr flexible Variantenbildung möglich, in der unter Verwendung einheitlicher Module 12_{1..n}, 14_{1..n} verschiedene Systeme mit unterschiedlichen Sichtfeldern konfiguriert werden können, wobei der Entwicklungsaufwand für die Variantenbildung gering ist. Das Gehäusekonzept gemäß Figur 3 eignet sich besonders für ein gemeinsames Sichtfeld, das horizontal sehr viel größer ist als vertikal, mit flacher Bauweise und guter thermischer Anbindung nach oben und unten. Dabei können benachbarte Teilsichtbereiche 28_{1..n} einen gewissen Überlapp 46 im Randbereich aufweisen.

Figur 4 zeigt eine schematische Draufsicht auf ein Lichtlaufzeitmodul 12 mit integriertem Beleuchtungsmodul 14. Es unterscheidet sich von der Ausführungsform gemäß Figur 2 durch eine Geometrie und ein umgebendes Teilmodulgehäuse 48 mit trapezförmiger Grundfläche passend zu dem gemeinsamen Gehäuse 44. Diese kompakte bauliche Einheit kann einfach in das gemeinsame Gehäuse 44 integriert werden.

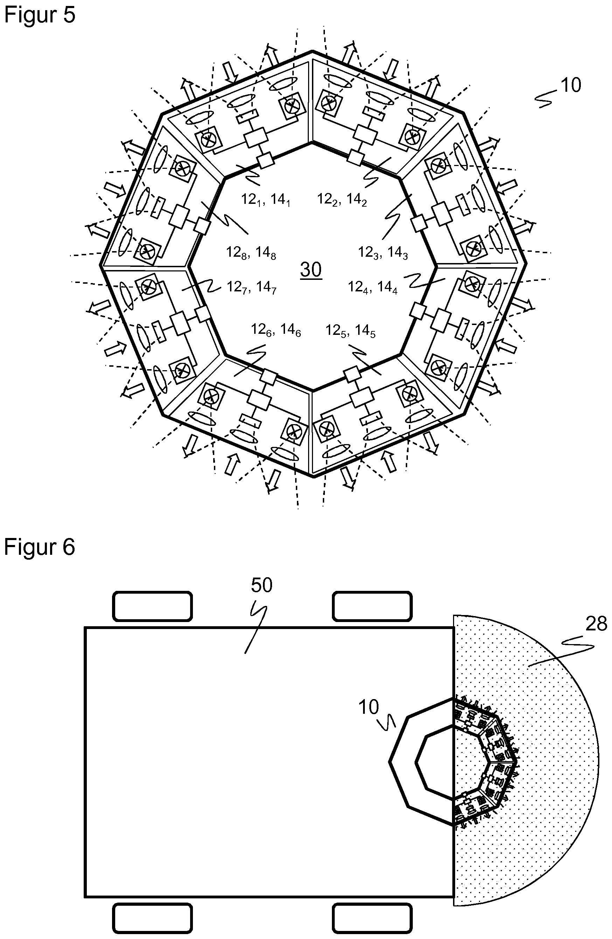

Figur 5 zeigt eine schematische Draufsicht auf eine 3D-Kamera 10 ähnlich Figur 3, mit dem Unterschied, dass hier alle Seiten des Achtecks besetzt sind, um eine Omnisicht über 360° zu erreichen. Außerdem sind die kompakten kombinierten Lichtlaufzeitmodule 12_{1..8} mit Beleuchtungsmodulen 14_{1..8} eingesetzt.

Figur 6 zeigt eine schematische Draufsicht auf ein Fahrzeug 50, insbesondere ein autonomes Fahrzeug (AGV, Automated Guided Vehicle) mit einer 3D-Kamera 10 gemäß Figur 3, jedoch mit vier besetzten Seiten, um horizontal ein gemeinsames Sichtfeld von ungefähr 180° in Fahrrichtung zu überwachen. In vertikaler Richtung genügt in einem solchen 1x4-System ein vergleichsweise schmaler Sichtwinkel von beispielsweise 35°.

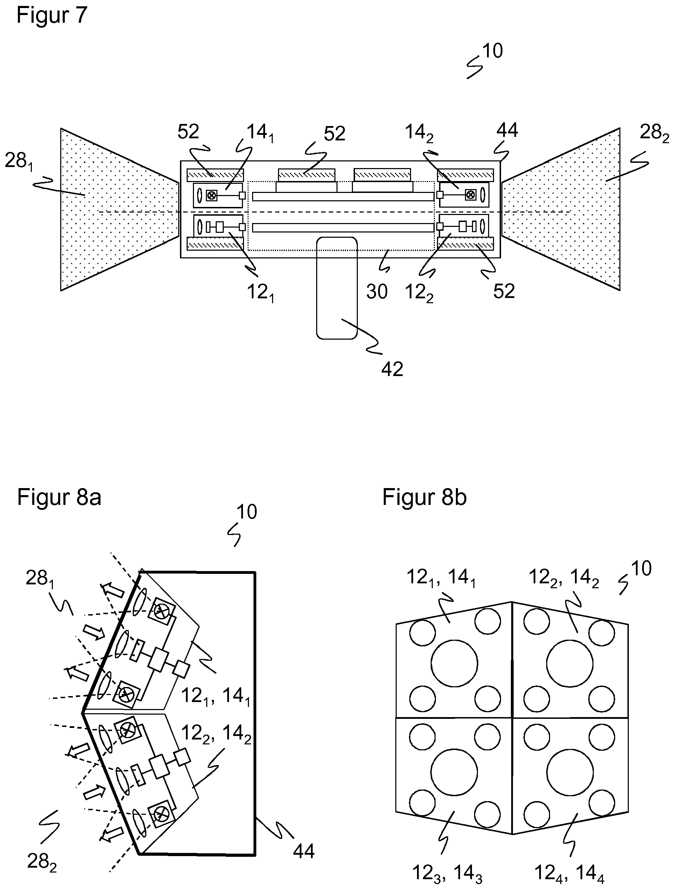

Figur 7 zeigt eine Schnittdarstellung durch eine weitere Ausführungsform der 3D-Kamera 10. In der Schnittdarstellung sind jeweils zwei Lichtlaufzeitmodule 12_{1..2} und zwei Beleuchtungsmodule 14_{1..2} erkennbar, wobei weiterhin weniger oder zusätzliche Module 12_{1..n}, 14_{1..n} denkbar sind. Eine Besonderheit dieser Anordnung ist, dass als weitere Variante die Lichtlaufzeitmodule 12_{1..2} und die Beleuchtungsmodule 14_{1..2} überstatt nebeneinander angeordnet sind. Die elektronischen Komponenten der zentralen Steuer- und Auswertungseinheit 30 sind ebenfalls platzsparend zentral übereinander angeordnet. Der gemeinsame Anschluss 42 wird nach unten oder alternativ nach oben herausgeführt, so dass horizontal ein 360°-Sichtfeld und damit eine omnidirektionale 3D-Kamera 10 realisierbar wird. Weiterhin können oben und unten Wärmefallen 52 (thermal pad) vorgesehen sein.

Wie Figur 8a-b illustriert, muss die Anordnung von Modulen 12_{1..n}, 14_{1..n} nicht in einer Ebene bleiben. Das Beispiel illustriert eine 2 x 2-Modulanordnung in einer Draufsicht gemäß Figur 8a und einer Frontalansicht gemäß Figur 8b. Damit lässt sich das Sichtfeld in zwei Dimensionen erweitern, wobei die Anzahl von Modulen 12_{1..n}, 14_{1..n} in beiden Achsenrichtungen rein beispielhaft ist.

Alternativ zu einer bisher vorgestellten Sichtfelderweiterung ist auch denkbar, dass Lichtlaufzeitmodule 12_{1..n} dieselbe oder zumindest eine deutlich überlappende Szene beobachten. Durch eine solche Mehrfachbeobachtung wird eine höhere Punktedichte in der 3D-Punktewolke beziehungsweise den dreidimensionalen Bilddaten erreicht. Außerdem wird in den überlappenden Bereichen die Beleuchtungsleistung erhöht, um dadurch beispielsweise die Messunsicherheit beziehungsweise Tiefenauflösung zu verbessern. Dafür ist eine Synchronisation der Module 12_{1..n}, 14_{1..n} beziehungsweise der Bildaufnahme erforderlich. Die Kompensation des Randlichtabfalls der einzelnen Module 12_{1..n}, 14_{1..n} ist ein Anwendungsfall, aber auch in zentralen Bereichen kann die redundante Erfassung die Qualität der dreidimensionalen Bilddaten verbessern. Weitere denkbare Vorteile einer Mehrfacherfassung sind Zusatzinformation durch verschiedene Blickrichtungen auf ein Objekt etwa zur Reduzierung von Abschattungseffekten oder zur teilweisen Eliminierung von Mehrwege-Effekten sowie eine verbesserte Erkennung von Objekten mit gerichteter Reflexion, also spiegelnden oder glänzenden Oberflächen wie Fenstern. Schließlich kann die redundante Szenenerfassung eine Autokalibrierung ermöglichen.

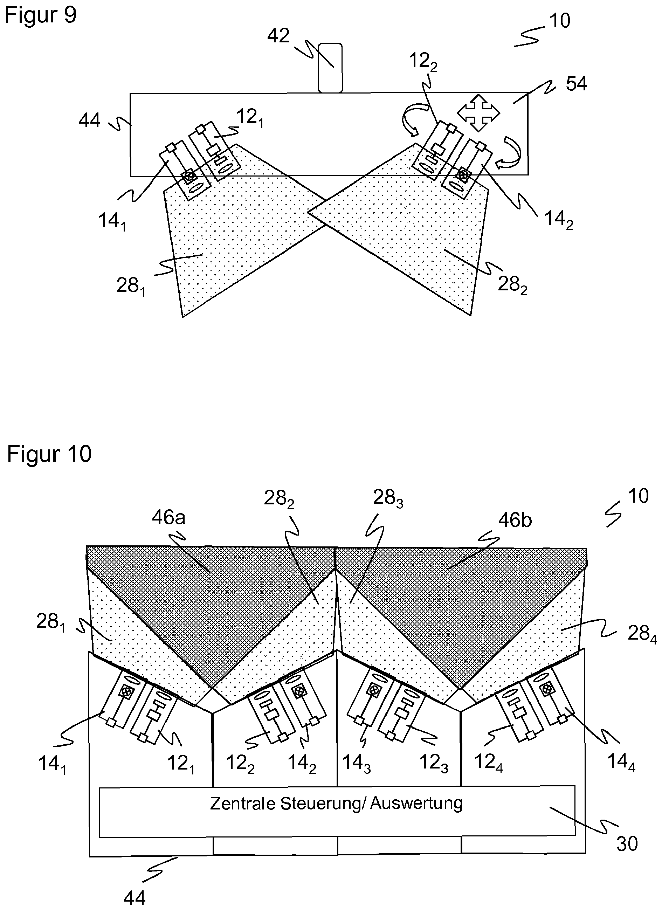

Die einzelnen Module 12_{1..n}, 14_{1..n} müssen hierfür nicht in einem bestimmten Winkel zueinander angeordnet sein. Figur 9 zeigt ein Ausführungsbeispiel mit zwei Modulen 12_{1..2}, 14_{1..2} und überlappenden Teilsichtbereichen 28_{1..2}. Die Gehäusekonstruktion erlaubt hier sogar eine variable Anordnung in unterschiedlichen Winkeln und mit flexiblem Abstand. Dazu ist eine nur ganz schematisch dargestellte Aktorik 54 vorgesehen, etwa auf Basis von Piezo-Aktoren, die ein Verschieben und/oder Verkippen bzw. Verdrehen ermöglicht. Die Anpassung dient der Justierung bei der Inbetriebnahme und Montage, kann aber sogar auch für dynamische Anwendungen im laufenden Betrieb genutzt werden.

Figur 10 zeigt ein weiteres Ausführungsbeispiel einer 3D-Kamera 10, die eine Sichtfelderweiterung mit einer Mehrfachaufnahme zur Verbesserung der dreidimensionalen Bilddaten kombiniert. Im konkreten Beispiel sind vier Module 12_{1..4}, 14_{1..4} vorgesehen, die paarweise dieselbe Szene in Überlappungsbereichen 46a-b beobachten. Es entsteht also gegenüber einem einzelnen Lichtlaufzeitmodul 12_{1..4} ein in etwa doppelt so großes Sichtfeld, in dem zugleich die Rohbilddaten doppelt erfasst werden. Dadurch kombinieren sich die Vorteile beider Herangehensweisen.

Bisher wurde eine reine 3D-Kamera zur Erfassung dreidimensionaler Bilddaten vorgestellt. Es ist denkbar, außer den Modulen 12_{1..n}, 14_{1..n} weitere Komponenten und Sensoren zu integrieren, an die zentrale Steuer- und Auswertungseinheit 30 anzubinden und in die Datenfusion einzubeziehen. Einige Beispiele sind ein- oder zweidimensionale Distanzsensoren, 2D-Monochrom- oder Farbkameras, so dass neben Tiefenmesswerten gleichzeitig auch ein Grau- oder Farbbild der Szene aufgenommen wird, das mit dem Tiefenbild direkt überlagert werden kann, zusätzliche Beleuchtungen für solche 2D-Kameras etwa mit Weißlicht, Inertialsensoren oder Beschleunigungssensoren insbesondere für die Navigation von Fahrzeugen, Ziellaser etwa zur Markierung der Mitte oder der Ränder des Sichtfeldes in der Szene insbesondere für Einrichtungszwecke oder RFID-Leser beziehungsweise Codelesesensoren zur Identifizierung von Objekten.

## Patentansprüche

1. 3D-Lichtlaufzeitkamera (10) zur Erfassung dreidimensionaler Bilddaten aus einem Erfassungsbereich (28) mit mehreren Lichtlaufzeitmodulen (12_{1..n}) zur Erfassung eines Teilsichtbereichs (28_{1..n}) des Erfassungsbereichs (28), die jeweils einen Bildsensor (16), eine Empfangsoptik (15) und eine Schnittstelle (20) zur Ausgabe von Rohbilddaten aufweisen, und mit mindestens einem Beleuchtungsmodul (14_{1..n}) zum Aussenden eines Lichtsignals in den Erfassungsbereich (28),
**dadurch gekennzeichnet,**
**dass** die 3D-Lichtlaufzeitkamera (10) eine zentrale Steuer- und Auswertungseinheit (30), die mit den Lichtlaufzeitmodulen (12_{1..n}) und den Beleuchtungsmodulen (14_{1..n}) verbunden ist, um die Rohbilddaten zu empfangen und daraus die dreidimensionalen Bilddaten zu erzeugen, einen gemeinsamen Anschluss (42) zur Ausgabe dreidimensionaler Bilddaten und/oder daraus abgeleiteter Daten und ein gemeinsames Gehäuse (44) umfasst, in dem die Lichtlaufzeitmodule (12_{1..n}), das mindestens eine Beleuchtungsmodul (14_{1..n}) und die zentrale Steuer- und Auswertungseinheit (30) untergebracht sind.

2. 3D-Lichtlaufzeitkamera (10) nach Anspruch 1,
wobei das gemeinsame Gehäuse (44) als Grundfläche die Form eines regelmäßigen n-Ecks mit n> 4 aufweist und die Lichtlaufzeitmodule (12_{1..n}) an zumindest einigen Seiten des n-Ecks angeordnet und nach außen ausgerichtet sind, wobei insbesondere entlang mindestens einer Dimension ein Erfassungsbereich (28) von bis zu 180° oder bis zu 360° erzielt ist.

3. 3D-Lichtlaufzeitkamera (10) nach Anspruch 2,
wobei die Lichtlaufzeitmodule (12_{1..n}) ein Gehäuse (48) mit einer Grundfläche in Form eines Trapezes oder eines Dreiecks passend zu einem Segment zwischen Zentrum und zwei benachbarten Ecken des n-Ecks aufweisen.

4. 3D-Lichtlaufzeitkamera (10) nach einem der vorhergehenden Ansprüche, wobei mindestens einige Lichtlaufzeitmodule (12_{1..n}) mit einem oder mehreren eigenen Beleuchtungsmodulen (14_{1..n}) kombiniert sind, insbesondere in einem gemeinsamen Modulgehäuse (48).

5. 3D-Lichtlaufzeitkamera (10) nach einem der vorhergehenden Ansprüche, wobei die Teilsichtbereiche (28_{1..n}) der Lichtlaufzeitmodule (12_{1..n}) unterschiedlich sind und einander zu dem Erfassungsbereich (28) ergänzen.

6. 3D-Lichtlaufzeitkamera (10) nach einem der vorhergehenden Ansprüche, wobei zumindest einige der Teilsichtbereiche (28_{1..n}) einander zumindest teilweise überlappen, wobei insbesondere in entstehenden Überlappungsbereichen (64) Zusatzinformationen gewonnen werden, die zumindest für einen der Zwecke Reduzierung von Abschattungseffekten, teilweise Eliminierung von Mehrwege-Effekten, verbesserte Erkennung von Objekten mit gerichteter Reflexion, lokale Erhöhung der örtlichen Auflösung oder Autokalibrierung genutzt werden.

7. 3D-Lichtlaufzeitkamera (10) nach einem der vorhergehenden Ansprüche, wobei zumindest einige der Lichtlaufzeitmodule (12_{1..n}) und/oder das mindestens eine Beleuchtungsmodul (14_{1..n}) eine Bewegungseinheit (56) zum Verändern des Teilsichtbereichs (28_{1..n}) aufweisen.

8. 3D-Lichtlaufzeitkamera (10) nach einem der vorhergehenden Ansprüche, wobei die zentrale Steuer- und Auswertungseinheit (30) dafür ausgebildet ist, Rohbilddaten aller oder einzelner Lichtlaufzeitmodule (12_{1..n}) sequentiell aufzunehmen.

9. 3D-Lichtlaufzeitkamera (10) nach einem der vorhergehenden Ansprüche wobei die zentrale Steuer- und Auswertungseinheit (30) dafür ausgebildet ist, Rohbilddaten aller oder einzelner Lichtlaufzeitmodule (12_{1..n}) simultan aufzunehmen, wobei eine gegenseitige Beeinflussung durch mindestens eine der Maßnahmen Kanaltrennung im Zeitbereich, Frequenzbereich, mittels Codemultiplex oder räumlich durch nicht überlappende Teilsichtbereiche (28_{1..n}) vermieden wird.

10. 3D-Lichtlaufzeitkamera (10) nach einem der vorhergehenden Ansprüche, wobei einzelne Lichtlaufzeitmodule (12_{1..n}) und/oder Beleuchtungsmodule (14_{1..n}) situationsbezogen selektiv nach Bedarf an- und abschaltbar sind.

11. 3D-Lichtlaufzeitkamera (10) nach einem der vorhergehenden Ansprüche, wobei die zentrale Steuer- und Auswertungseinheit (30) eine Bilddatenflusssteuerung (34) aufweist, um die Rohbilddaten koordiniert aus den Lichtlaufzeitmodulen (12_{1..n}) auszulesen, wobei die Bilddatenflusssteuerung (34) eine Multiplexeinheit zum sequentiellen Auslesen von Rohbilddaten aus jeweils einem anderen Lichtlaufzeitmodul (12_{1..n}) und/oder mehrere Kanäle aufweist.

12. 3D-Lichtlaufzeitkamera (10) nach einem der vorhergehenden Ansprüche, wobei die zentrale Steuer- und Auswertungseinheit (30) für eine Aufbereitung der Rohbilddaten ausgebildet ist, die zumindest einen der Schritte Korrektur von Objektivverzeichnungen der Empfangsoptik (15), Kompensation von Driften, Korrektur der Anordnung der Lichtlaufzeitmodule (12_{1..n}) zueinander, Verrechnung mehrerer Rohbilder oder Berücksichtigung von Kalibrierdaten umfasst.

13. 3D-Lichtlaufzeitkamera (10) nach einem der vorhergehenden Ansprüche, wobei die zentrale Steuer- und Auswertungseinheit (30) für eine Weiterverarbeitung der dreidimensionalen Bilddaten nach Fusion der Rohbilddaten ausgebildet ist, insbesondere eine Datenfilterung, eine Datenkompression, eine Auswahl von interessierenden Bereichen, Datenumwandlung in ein gewünschtes Ausgabeformat, eine Objekterkennung oder ein Objekttracking.

14. 3D-Lichtlaufzeitkamera (10) nach einem der vorhergehenden Ansprüche, wobei zur Einbeziehung in die Datenfusion mindestens eines der Folgenden an die zentrale Steuer- und Auswertungseinheit (30) angeschlossen ist: ein eino der zweidimensionaler Distanzsensor, eine 2D-Monochrom- oder Farbkamera zur Überlagerung von deren Bilder mit den dreidimensionalen Bilddaten, eine Beleuchtung für 2D-Kameras insbesondere mit Weißlicht, ein Inertialsensor, ein Beschleunigungssensor, ein Ziellaser zur Markierung der Mitte oder der Ränder des Erfassungsbereichs (28) insbesondere für Einrichtungszwecke, ein RFID-Leser oder Codelesesensoren zur Identifizierung von Objekten und/oder wobei der gemeinsame Anschluss (42) eine gemeinsame Stromversorgung und/oder analoge oder digitale Ein- und/oder Ausgänge aufweist, insbesondere Schaltausgänge, die zumindest teilweise über ein gemeinsames Kabel geführt sind.

15. Verfahren zur Erfassung dreidimensionaler Bilddaten aus einem Erfassungsbereich (28), wobei Rohbilddaten aus mehreren Teilsichtbereichen (28_{1..n}) des Erfassungsbereichs (28) separat erfasst werden,
**dadurch gekennzeichnet,**
**dass** die Rohbilddaten zentral gesammelt und daraus die dreidimensionalen Bilddaten erzeugt werden, dass dann die dreidimensionalen Bilddaten und/oder daraus abgeleitete Daten an einem gemeinsamen Anschluss (42) ausgegeben werden und dass die Erfassung der Rohbilddaten und die Erzeugung der dreidimensionalen Bilddaten aus den Rohbilddaten innerhalb eines gemeinsamen Gehäuses (44) erfolgt.
